## Europäisches Patentamt
## European Patent Office
## Office européen des brevets

(19)

(11) Veröffentlichungsnummer: **0 242 406**
**B1**

(12) **EUROPÄISCHE PATENTSCHRIFT**

(45) Veröffentlichungstag der Patentschrift:
**22.03.89**

(51) Int. Cl.⁴: **G01P 1/00**

(21) Anmeldenummer: 86105197.7

(22) Anmeldetag: **15.04.86**

(54) Beschleunigungsaufnehmer sowie Verfahren zur Herstellung eines Beschleunigungsaufnehmers.

(43) Veröffentlichungstag der Anmeldung:
**28.10.87 Patentblatt 87/44**

(45) Bekanntmachung des Hinweises auf die Patenterteilung:
**22.03.89 Patentblatt 89/12**

(84) Benannte Vertragsstaaten:
**CH DE FR GB LI**

(56) Entgegenhaltungen:
**AT-A- 318 955**
**DE-A- 1 816 998**
**DE-A- 2 932 888**
**FR-A- 2 305 734**
**GB-A- 2 130 373**
**US-A- 2 665 896**

**IEEE SPECTRUM, Band 12, Nr. 3, März 1975,
Seiten 53-57, New York, US; R. MOSKOWITZ:
"Ferrofluids: liquid magnetics"**

(73) Patentinhaber: **HOTTINGER BALDWIN MESSTECHNIK GMBH, Im Tiefen See 45 Postfach 42 35, D-6100 Darmstadt(DE)**

(72) Erfinder: **Paul, Heinrich, Ahornweg 21, D-6078 Neu-Isenburg(DE)**

(74) Vertreter: **Brand, Fritz, Dipl.-Ing., Hottinger Baldwin Messtechnik GmbH Patentabteilung Im Tiefen See 45 Postfach 42 35, D-6100 Darmstadt(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung bezieht sich auf einen Beschleunigungsaufnehmer mit einer federnd abgestützten trägen Masse und mit einer in geringem Abstand zur trägen Masse angeordneten, mit der Abstützung verbundenen, zu Erzielung einer Flüssigkeitsdämpfung vorgesehenen Wand sowie auf ein Verfahren zur Herstellung eines Beschleunigungsaufnehmers.

Ein derartiger Beschleunigungsaufnehmer ist aus der DE-AS 1 816 998 bekannt. Die träge Masse ist über eine einseitig eingespannte Biegefeder an einem Bauteil eines Gehäuses abgestützt. In geringem Abstand zur Masse und zur Biegefeder ist eine Wand derart angeordnet, daß ein Spalt zwischen Masse und Wand ausgebildet ist. Zur Erzielung einer Flüssigkeitsdämpfung ist das Gehäuse mit einer Dämpfungsflüssigkeit gefüllt und mit einem Deckel verschließbar. Dieser Beschleunigungsaufnehmer ist aufwendig. Aufgrund der hermetischen Kapselung und der vollständigen Füllung des Gehäuses muß eine gegen die Dämpfungsflüssigkeit abgedichtete Volumenausgleichskammer im Gehäuse vorgesehen werden. Zur Abdichtung des Deckels und zur Abdichtung der aus dem Gehäuse herausgeführten elektrischen Anschlüsse sind mehrere Dichtungen erforderlich. Stellt man fest, daß der für eine bestimmte Bezugstemperatur vorgegebene Dämpfungsfaktor nicht vorliegt, so ist eine Korrektur nur über einen Austausch der das Gehäuse füllenden Dämpfungsflüssigkeit in aufwendiger Weise zu bewerkstelligen.

Der Erfindung liegt die Aufgabe zugrunde, einen Beschleunigungsaufnehmer der eingangs genannten Art zu schaffen, der einfach aufgebaut und zu montieren ist und dessen Dämpfungsfaktor leicht und schnell eingestellt werden kann.

Erfindungsgemäß wird diese Aufgabe dadurch gelöst, daß sich im Spalt zwischen träger Masse und Wand eine magnetische Flüssigkeit befindet und daß der Spalt Teil eines Magnetsystems mit quer zum Spalt verlaufenden Magnetfeldlinien ist.

Aus der DE-OS 2 612 553 ist die Verwendung einer magnetischen Flüssigkeit bei einem Beschleunigungsaufnehmer zwar bekannt, jedoch ist bei dem bekannten Beschleunigungsaufnehmer das einen zylinderförmigen, die träge Masse bildenden Permanentmagneten umgebende rohrförmige Gehäuse vollständig mit der magnetischen Flüssigkeit angefüllt und die Magnetfeldlinien verlaufen bei diesem Beschleunigungsaufnehmer nicht quer zum Raum zwischen träger Masse und Innenwandung des rohrförmigen Gehäuses. Durch das Zusammenwirken des Magnetfeldes der trägen Masse und der magnetischen Flüssigkeit wird die schwimmend im Gehäuse angeordnete träge Masse in radialer Richtung mittig im Gehäuse gehalten. Bewegungen in Axialrichtung werden durch Magnetspulen, welche das Gehäuse umgeben, derart beeinflußt, daß die träge Masse auch in Axialrichtung zentriert ist.

Aufgrund der erfindungsgemäßen Ausbildung des Beschleunigungsaufnehmers ist es zur Erzielung einer Dämpfung nicht erforderlich, das Gehäuse vollständig mit Dämpfungsflüssigkeit zu füllen, da die magnetische Flüssigkeit nach Einbringen in den Spalt im Spalt gehalten wird; in vorteilhafter Weise wird mit einer sehr geringen Menge an Dämpfungsflüssigkeit die vorgegebene Dämpfung erreicht. Die Abstimmung von die Dämpfung bestimmenden Größen kann durchgeführt werden, ohne daß das Gehäuse verschlossen werden muß. Die Abstimmung kann vorteilhaft durch Justierung der Spaltbreite bei vorgegebener Viskosität der Dämpfungsflüssigkeit, oder, bei vorgegebener Spaltbreite, durch Einbringen einer Dämpfungsflüssigkeit mit bestimmter Viskosität in den Spalt erfolgen. Da sich die Dämpfungsflüssigkeit nur im Spalt befindet, kann das restliche Volumen des Gehäuses bei hermetischer Kapselung evakuiert oder mit einem Schutzgas angefüllt werden. Besondere Vorkehrungen zum Ausgleich der temperaturabhängigen Volumendehnung der Dämpfungsflüssigkeit sind in vorteilhafter Weise nicht erforderlich, da eine temperaturbedingte Expansion gegebenenfalls durch Übertreten der Flüssigkeit an den Spalträndern ausgeglichen wird; die magnetische Flüssigkeit bildet dabei ebenso wie bei einer temperaturbedingten Volumenverringerung auch weiterhin einen zusammenhängenden Flüssigkeitsfilm. Durch die erfindungsgemäße Ausbildung ist ferner eine Einstellmöglichkeit der Dämpfung mit Hilfe der von der magnetischen Flüssigkeit belegten Wandfläche bzw. der zugeordneten Fläche der trägen Masse gegeben. Verläuft das Magnetfeld auch quer zur Bewegungsrichtung eines sich relativ zu den Magnetfeldlinien bewegenden Bauteils so ist bei geeigneter Materialauswahl eine Unterstützung der Flüssigkeitsdämpfung durch eine Wirbelstromdämpfung erzielbar. Die durch das Magnetfeld beeinflussbare Wirbelstromdämpfung läßt sich dabei in vorteilhafter Weise auch zur Justierung der Dämpfung heranziehen, indem unter Magnetsystemen bzw. Magneten z.B. unterschiedlicher Magnetfeldstärke ausgewählt werden kann.

In einer vorteilhaft herstellbaren Ausführungsform der Erfindung ist vorgesehen, daß die Wandfläche eben ist.

Bei einer weiteren Ausführungsform weisen die Wandfläche und eine zugeordnete Fläche der trägen Masse eine Krümmung auf, die vorzugsweise zylindrisch ist, wobei ein gekrümmter, vorzugsweise ringförmiger Spalt zwischen Wand und träger Masse vorgesehen ist. Die Wandfläche kann dabei unter Ausbildung eines in sich geschlossenen Ringspalts ein in der Achse angeordnetes vorzugsweise zylindrisches Teil des Magnetsystems umgeben. Dabei kann in den Ringspalt eine rohrförmig ausgebildete träge Masse eintauchen. Eine Bewegung der trägen Masse ist sowohl quer als auch parallel zur Achse möglich. Statt dessen ist auch eine beschleunigungsabhängige Rotationsbewegung um die Achse möglich, wobei die Abstützung über eine in der Achse liegende Torsionsfeder erfolgt. Bei einer Bewegungsrichtung der trägen Masse quer zur Achse ergibt sich eine zusätzliche Dämpfung infolge der Flüssigkeitsverdrängung im Ringspalt, die sich aufgrund des sich ändernden Spaltquerschnitts – gesehen in Umfangsrichtung – einstellt. Dichtungen an den axialen Enden des Ringspalts sind dabei aufgrund des Zusammenhalts des Flüssigkeitsfilms in vorteilhafter Weise nicht erforderlich. Aufgrund der zylindrischen Krümmung können die Teile auch bei einer Massenfertigung kostengünstig und präzise hergestellt werden.

In einer fertigungsgünstigen Ausführungsform ist vorgesehen, daß in geringem Abstand zu sich gegenüberliegenden Bereichen der trägen Masse jeweils eine Wand verläuft.

Besonders vorteilhaft ist eine Anordnung mit zwei Wänden, deren Wandflächen parallel zueinander verlaufen.

Bei Anordnung der Wandflächen parallel zur Schwingungsrichtung liegt vorteilhaft ein lineares Dämpfungsverhalten vor.

Zweckmäßig ist eine Ausführungsform, bei der als federnde Abstützung eine an einem Bauteil eines Gehäuses abgestützte Blattfeder vorgesehen ist, deren elastische Verformung mittels einer Dehnungsmeßstreifen-Anordnung bestimmt wird. Zweckmäßig ist eine mittige Anordnung der trägen Masse an der Blattfeder und eine Abstützung der Blattfederenden an einem Teil des Gehäuses. Bei nicht einteilig ausgebildeter Blattfeder wird dabei die Abstützung an zwei gleichen Blattfederteilen vorgenommen. Vorteilhaft kann eine Dehnungsmeßstreifen-Anordnung mit Folien-, Dünnfilm- oder Halbleiter-Dehnungsmeßstreifen zum Einsatz kommen. Die Feder-Masse-Anordnung und beispielsweise eine Dünnfilm-Dehnungsmeßstreifen-Anordnung lassen sich fertigungsgünstig mittels Ätztechnik herstellen; auch Elemente der Anpaßschaltung können mit diesem Herstellungsverfahren zusammen mit den Dünnfilm-Strukturen hergestellt werden. Die Schaltungsanordnung kann gegebenenfalls in Hybridtechnik ausgeführt sein.

Besonders vorteilhaft ist eine Ausführungsform, bei der die Spaltbreite justierbar ist. Nach Einbringen der Dämpfungsflüssigkeit in den Spalt kann der Dämpfungsfaktor bei vorgegebener Viskosität der Dämpfungsflüssigkeit durch Verstellen der Spaltbreite auf einfachste Weise eingestellt werden; die Überprüfung des Dämpfungsfaktors erfolgt dabei bei offenem Gehäuse.

Dadurch, daß die Spaltbreite in einer bevorzugten Weiterbildung temperaturabhängig veränderbar ist, werden temperaturbedingte Meßfehler auf einfache Weise kompensiert. Die Spaltbreitenveränderung kann beispielsweise mit einem Bimetallelement oder mittels der Volumendehnung eines gasgefüllten Bauelements oder infolge der linearen Wärmedehnung eines Bauteils erzielt werden.

Besonders einfach ist eine Ausbildung, bei der das Magnetsystem einen Permanentmagneten aufweist; zweckmäßigerweise ist dabei vorgesehen, daß die Wand permanentmagnetisch ist oder mit einem Permanentmagneten magnetisch leitend verbunden ist. Es kann jedoch stattdessen die träge Masse als Permanentmagnet ausgebildet sein.

Eine Unterstützung der Flüssigkeitsdämpfung durch eine Wirbelstromdämpfung stellt sich vorteilhaft bei einer Weiterbildung der Erfindung ein, bei der die Magnetfeldlinien quer zur Bewegungsrichtung eines sich relativ zu den Magnetfeldlinien bewegenden, elektrisch leitenden, nicht ferromagnetischen Bauteils, insbesondere quer zur Bewegungsrichtung der trägen Masse, verlaufen. Die zusätzliche Wirbelstromdämpfung läßt sich besonders vorteilhaft zur Justierung des Dämpfungsverhaltens heranziehen, indem beispielsweise die Magnetfeldstärke durch Einsatz unterschiedlicher Permanentmagnete oder durch die Verstellung von Elektromagneten geändert wird.

Als magnetische Flüssigkeit kommt eine gegen Agglomeration geschützte Suspension von ferromagnetischen Teilchen mit Abmessungen in der Größenordnung von 10 nm in einer Trägerflüssigkeit zum Einsatz.

Zweckmäßig kann das Gehäuse zur Kapselung gegen Umgebungseinflüsse hermetisch abgeschlossen sein. Da sich die Dämpfungsflüssigkeit nur im Spalt befindet, kann zur Verhinderung von Korrosionseinflüssen das Gehäuse bei hermetischer Kapselung evakuiert oder mit einem Schutzgas angefüllt werden.

Besonders einfach läßt sich die Genauigkeit der Dämpfungseinstellung mit einem Verfahren gewährleisten, bei dem zunächst die federnde Abstützung der trägen Masse vorgenommen wird, danach die magentische Flüssigkeit in den Spalt zwischen träger Masse und Wand eingebracht wird, die Dämpfung gemessen und gegebenenfalls eine Justierung der Spaltbreite vorgenommen wird. Statt dessen kann jedoch auch ein Verfahren vorgesehen werden, bei dem die träge Masse und die das Magnetsystem bildenden Teile zu einer Baueinheit zusammengestellt werden, die dieser Baueinheit zugeordnete Spaltbreite bestimmt wird und schließlich eine Dämpfungsflüssigkeit mit einer durch die Spaltbreite vorgegebenen Dämpfungseigenschaft in den Spalt eingebracht wird. Eine einfache Einstellung der Dämpfung ist auch bei einem Verfahren gegeben, bei dem die träge Masse und die das Magnetsystem bildenden Teile zu einer Baueinheit zusammengestellt werden, die Spaltbreite bestimmt oder die Dämpfung nach vorherigem Einbringen der magnetischen Flüssigkeit in den Spalt gemessen wird und gegebenenfalls eine Justierung des Magnetfeldes vorgenommen wird.

Ausführungsformen der Erfindung sind in der Zeichnung dargestellt und werden im folgenden näher beschrieben. Es zeigen:

Fig. 1 einen Beschleunigungsaufnehmer im Schnitt,

Fig. 2 eine Draufsicht des Beschleunigungsaufnehmers nach Fig. 1,

Fig. 2a eine schematische Darstellung des Beschleunigungsaufnehmers nach Fig. 2,

Fig. 3 eine schematische Darstellung eines weiteren Beschleunigungsaufnehmers,

Fig. 4 einen weiteren Beschleunigungsaufnehmer in schematischer Darstellung,

Fig. 5 einen schematisch dargestellten Beschleunigungsaufnehmer im Schnitt,

Fig. 6 eine Seitenansicht des Beschleunigungsaufnehmers nach Fig. 5,

Fig. 7 einen Beschleunigungsaufnehmer in schematischer Darstellung.

Einander entsprechende Bauteile sind in den Figuren mit gleichen Bezugszeichen versehen.

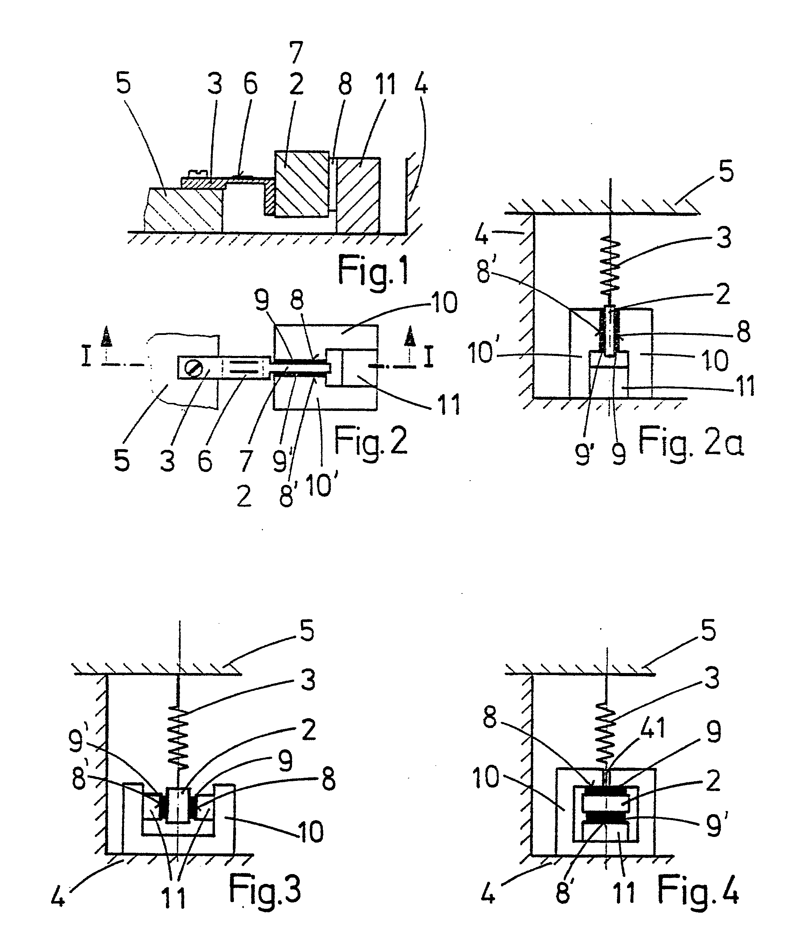

Der in den Figuren 1 und 2 dargestellte Beschleunigungsaufnehmer weist eine träge Masse 2 auf, die flüssigkeitsgedämpft über ein Federelement 3 an einem Teil 5 des Gehäuses 4 abgestützt ist. Das Gehäuse 4 ist in nicht näher dargestellter Weise mit dem zu untersuchenden Körper verbunden. Das Gehäuse 4 überträgt die zu messende Beschleunigung des Körpers mittelbar über das Federelement 3 auf die träge Masse 2. Die dabei auftretende relative Verschiebung zwischen träger Masse 2 und Gehäuse 4 ist ein Maß für die absolute Beschleunigung des zu untersuchenden Körpers.

Das Federelement 3 in Form einer Blattfeder ist über geeignete Mittel, im dargestellten Fall über eine Schraube, einseitig an dem Teil 5 des Gehäuses 4 abgestützt, während das andere Ende frei schwingen kann. Das Teil 5 kann einteilig mit dem Gehäuse 4 ausgebildet sein oder fest mit dem Gehäuse 4 verbunden sein. Die Blattfeder ist im mittleren Bereich mit einer Dehnungsmeßstreifen-Anordnung 6 versehen, die, abhängig von der Verformung der Blattfeder, eine Widerstandsänderung vorgibt, mit deren Hilfe die elastische Verformung der Blattfeder in ein elektrisches Signal umgewandelt wird. Die Dehnungsmeßstreifen-Anordnung 6 ist mit nicht dargestellten Anschlußdrähten versehen, die abgedichtet aus dem Gehäuse 4 herausgeführt werden. Die Blattfeder kann gegebenenfalls so ausgebildet sein, daß sie an den Enden mit zwei gleichen trägen Massen versehen und mittig abgestützt ist oder daß die träge Masse mittig angreift und die Abstützung an beiden Enden erfolgt. In diesen Fällen liegen symmetrische Feder-Masse-Anordnungen vor. Dies gilt auch für eine Anordnung, bei der die träge Masse über zwei gleiche Blattfederteile abgestützt ist. Das Gehäuse 4 ist mit einem Deckel hermetisch verschließbar und in verschlossenem Zustand mit einer Schutzgasfüllung versehen. Statt der Schutzgasfüllung kann auch eine Evakuierung des Gehäuses erfolgen.

Die träge Masse 2 ist am freien Ende der Blattfeder angeordnet und ist als Platte 7 mit nahezu quadratischen Plattenoberflächen und geringer Plattendicke ausgebildet. Die Platte 7 besteht aus einem nicht ferromagnetischen Material. Als Material für die Platte 7 kommen beispielsweise Metalle oder auch nichtmetallische Werkstoffe wie z.B. Kunststoffe oder Keramik in Frage. Die Plattenoberflächen 7 sind um 90° gegen die Oberfläche der Blattfeder verdreht, so daß die Plattenoberflächen parallel zur Schwingungsrichtung der Blattfeder verlaufen.

In geringem Abstand zu den beiden Plattenoberflächen der Platte 7 sind Wände 8, 8' angeordnet, deren Wandflächen parallel zueinander verlaufen. Die Wände 8, 8' sind in nicht dargestellter Weise fest mit dem Gehäuse 4 verbindbar. Zwischen der Plattenoberfläche und der zugeordneten Wandfläche ist jeweils ein Spalt 9, 9' gebildet, der zur Flüssigkeitsdämpfung mit Flüssigkeit gefüllt ist.

Als Dämpfungsflüssigkeit wird eine magnetische Flüssigkeit auf Diesterbasis verwendet. Die Dämpfungsflüssigkeit besteht aus einer Suspension von ferromagnetischen Teilchen mit Abmessungen in der Größenordnung von etwa 10 nm in der Trägerflüssigkeit, wobei ein Schutz gegen Agglomeration der suspendierten Teilchen vorgesehen ist. Die Teilchengröße kann zwischen 1 und 100 nm liegen.

Der Spalt 9, 9' ist Teil eines Magnetsystems mit Magnetfeldlinien, die den Spalt 9, 9' im wesentlichen orthogonal durchsetzen. Das Magnetsystem umfaßt einen etwa quaderförmigen Permanentmagneten 11 aus z.B. CoSm, dem die Jochteile 10, 10' zugeordnet sind. Es können auch andere, dem zuständigen Fachmann geläufige Magnetmaterialien wie AlNiCo oder oxidische Magnetmaterialien Verwendung finden. Magnet 11 und Jochteile 10, 10' sind etwa U-förmig angeordnet, wobei der Magnet 11 den Verbindungssteg und die Jochteile 10, 10' die Schenkel bilden. Die Innenseiten der Schenkel bilden die den Spalt 9, 9' begrenzenden Wände 8, 8'. Der Wand 8 ist im Beispiel der Nordpol des Magneten zugeordnet, während der Wand 8' der Südpol zugeordnet ist. Zur Einstellung der Spaltbreite sind die Jochteile 10, 10' quer zur Spaltrichtung gegeneinander verschiebbar. Derartige Verschiebeeinrichtungen sind dem zuständigen Fachmann bekannt und werden deshalb hier nicht weiter beschrieben. Nach der Einstellung sind der Magnet 11 und die Jochteile 10, 10' fest miteinander und mit dem Gehäuse 4 verbunden.

Bei dem derart ausgebildeten Magnetsystem befindet sich die magnetische Flüssigkeit nur im Spalt 9, 9' zwischen der Wandfläche und der Plattenoberfläche der Platte 7. Dichtvorrichtungen für das Flüssigkeitsvolumen im Spalt 9, 9' sind nicht erforderlich, da die magnetische Flüssigkeit durch das Magnetfeld im Spalt 9, 9' gehalten wird.

Nach Einbringen der magnetischen Flüssigkeit in den Spalt 9, 9' wird die sich einstellende Dämpfung gemessen und gegebenenfalls durch gegenseitige Verschiebung der Jochteile 10, 10' unter Veränderung der Spaltbreite auf den geforderten Wert eingestellt. Danach wird das Gehäuse 4 mit dem Deckel verschlossen und mit Schutzgas gefüllt.

Die im vorhergehenden beschriebene Anordnung ist in der Fig. 2a noch weiter schematisiert dargestellt, wobei gleiche Bauteile mit gleichen Bezugszeichen versehen sind; die Fig. 2a ist gegenüber der Darstellung in Fig. 2 um 90° gedreht.

Der in Fig. 3 ebenfalls schematisch dargestellte Beschleunigungsaufnehmer weist eine flüssigkeitsgedämpfte träge Masse 2 aus einem elektrisch leitenden Material, vorzugsweise aus Kupfer oder Aluminium auf, die über ein Federelement 3 am Teil 5 und damit am Gehäuse 4 abgestützt ist. Das Federelement 32 ist als Schraubenfeder dargestellt, die eine Bewegung der trägen Masse 2 in vertikaler Richtung in der Darstellungsebene ermöglicht.

Das Magnetsystem umfaßt zwei beiderseits der trägen Masse 2 in geringem Abstand angeordnete Permanentmagnete 11, denen ein Jochteil 10 zugeordnet ist. Das Jochteil 10 ist etwa U-förmig ausgebildet, wobei die Magnete 11 an den Innenseiten der Schenkel angeordnet sind. Die Magnete 11 bilden die beiden Wände 8, 8', die sich beiderseits der trägen Masse 2 befinden und die mit ihren Wandflächen den Spalt 9, 9' begrenzen. Die träge Masse 2 ist zwischen den Wänden 8, 8' längsbeweglich. Die Magnetfeldlinien durchsetzen den Spalt 9, 9' im wesentlichen orthogonal.

Nach Einbringen der magnetischen Flüssigkeit in den Spalt 9, 9' wird die sich einstellende Dämpfung gemessen und gegebenenfalls auf den geforderten Wert eingestellt. Da das Magnetfeld den Spalt 9, 9' im wesentlichen orthogonal durchsetzt und damit auch quer zur Bewegungsrichtung der trägen Masse 2, die aus einem elektrisch leitenden, nicht ferromagnetischen Material besteht, verläuft, wird die Bewegung der trägen Masse auch durch eine Wirbelstromdämpfung gedämpft, die jedoch im Vergleich zur Flüssigkeitsdämpfung einen geringeren Anteil an der gesamten Dämpfung hat. Die Wirbelstromdämpfung kann für die Einstellung des Dämpfungsfaktors herangezogen werden. Die Einstellung wird dabei durch Austausch eines oder beider Magnete 11 gegen Magnete geeigneter Magnetfeldstärke bewerkstelligt.

Auch bei dem in Figur 1 und Figur 2 dargestellten Beschleunigungsaufnehmer kann eine Einstellung des Dämpfungsfaktors durch Austausch des Magneten 11 vorgenommen werden, sofern die Platte 7 aus einem elektrisch leitenden, nicht ferromagnetischen Werkstoff besteht.

Bei dem Beschleunigungsaufnehmer nach Fig. 3 kann das Federelement 3 in der Praxis z.B. statt als Schraubenfeder auch als Blattfeder ausgebildet sein, die eine Bewegung der trägen Masse in nahezu senkrechter Richtung zur Darstellungsebene längs der Wände ermöglicht.

Bei dem ebenfalls schematisch dargestellten Beschleunigungsaufnehmer nach Fig. 4 ist die träge Masse 2 über ein als Schraubenfeder dargestelltes Federelement 3 am Gehäuse 4 abgestützt. Die träge Masse 2 kann sich in der Darstellungsebene in vertikaler Richtung bewegen.

Das Magnetsystem umfaßt einen Permanentmagneten 11, dem ein Jochteil 10 in Form eines im wesentlichen rechteckförmigen Hohlprofils zugeordnet ist. Der Magnet 11 befindet sich an einer der Innenflächen des Hohlprofils. Das Magnetsystem weist ein Magnetfeld auf, dessen Feldlinien zwischen Magnet 11 und der gegenüberliegenden Innenseite des Hohlprofils verlaufen. Der dem Magneten 11 gegenüberliegende Teil des Hohlprofils weist eine Öffnung 41 auf, durch die ein Fortsatz der Schraubenfeder ins Innere des Hohlprofils ragt. Die Schraubenfeder ist an ihrem ins Innere des Hohlprofils ragenden Ende mit der trägen Masse 2 versehen. Der mit der Öffnung 41 versehene Teil des Hohlprofils bildet die der einen Seite der trägen Masse 2 gegenüberliegende Wand 8, während der Magnet 11 die zweite, der anderen Seite der trägen Masse 2 gegenüberliegende Wand 8' bildet. Zwischen der Wand 8, 8' und der trägen Masse 2 ist der Spalt 9, 9' ausgebildet, der mit der magnetischen Flüssigkeit gefüllt ist.

Bei Bewegung der trägen Masse 2 verändert sich die Spaltbreite des Spaltes 9, 9'; eine Verkleinerung des Spaltes 9' zwischen Magnet 11 und träger Masse 2 ist mit einer Vergrößerung des Spaltes 9 zwischen träger Masse 2 und Innenfläche des Hohlprofils verbunden. Ein Ausgleich des im Spalt 9, 9' befindlichen Flüssigkeitsvolumens ist durch Übertreten der magnetischen Flüssigkeit an den Spalträndern möglich. Die magnetische Flüssigkeit bildet auch bei Volumenveränderungen bzw. -verschiebungen einen zusammenhängenden Flüssigkeitsfilm, da sie vom quer zum Spalt 9, 9' verlaufenden Magnetfeld im wesentlichen im Spalt 9, 9' gehalten wird. Das Hohlprofil 10 kann fertigungsgünstig ein rotationssymmetrisches Teil bilden; die träge Masse 2 und der Magnet 11 können als zylinderförmige Teile ausgebildet sein.

Nach Einbringen der magnetischen Flüssigkeit in den Spalt 9, 9' wird die Dämpfung gemessen und gegebenenfalls auf den geforderten Wert eingestellt. Die Einstellung kann durch Austausch der Flüssigkeit im Spalt 9, 9' gegen eine Flüssigkeit mit unterschiedlicher Dämpfungseigenschaft erfolgen.

Die in der Figur 4 über eine Schraubenfeder abgestützte träge Masse 2 kann auch so angeordnet werden, daß sie beschleunigungsabhängig eine Relativbewegung in Form einer Rotationsbewegung ausführt. Über eine mit der Achse der trägen Masse 2 und der des Magneten 11 fluchtende Torsionsfeder erfolgt dann die Abstützung der trägen Masse 2 am Teil 5 des Gehäuses 4, während die übrige Anordnung nach Fig. 4 im wesentlichen unverändert beibehalten werden kann. Da die träge Masse 2 über eine Torsionsfeder abgestützt ist, verändert sich jedoch bei Bewegung der trägen Masse 2 die Spaltbreite des Spaltes 9, 9' nicht.

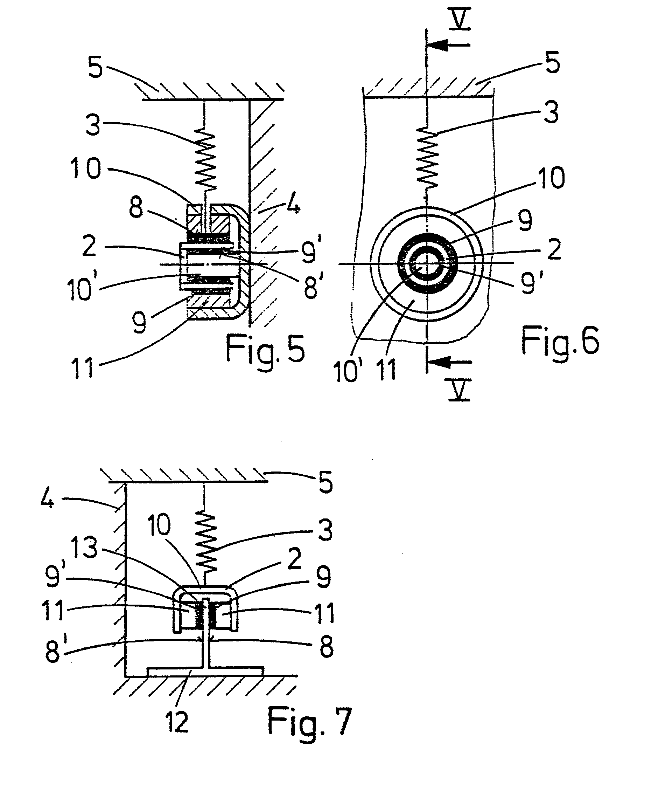

Der in den Figuren 5 und 6 in einer Prinzipskizze dargestellte Beschleunigungsaufnehmer weist eine träge Masse 2 auf, die über ein als Schraubenfeder dargestelltes Federelement 3 am Gehäuse 4 abgestützt ist. Das Federelement 3 ermöglicht eine Bewegung der trägen Masse in vertikaler Richtung in der Darstellungsebene der Figur 5.

Das Magnetsystem umfaßt einen ringförmigen Permanentmagneten 11, der von einem im wesentlichen topfförmig ausgebildeten Jochteil 10 etwa gleicher axialer Tiefe umgeben ist. Ein weiteres Jochteil 10' ist in der Achse des Topfes angebracht. Der ringförmige Magnet 11 umschließt mit seiner Öffnung unter Ausbildung eines Ringspaltes das zentrisch angeordnete Jochteil 10'. Die Magnetfeldlinien durchsetzen den Ringspalt in radialer Richtung. In diesen Ringspalt taucht die rohrförmig ausgebildete träge Masse 2 ein und umgibt den größten Teil des inneren Jochteils 10'. Zwischen dem ringförmigen, die Wand 8 bildenden Magneten 11 und der trägen Masse 2 und zwischen dem inneren Jochteil 10' mit der Wand 8' und der trägen Masse 2 ist jeweils ein ringförmiger Spalt 9, 9' zur Aufnahme der magnetischen Flüssigkeit ausgebildet.

Im Rahmen der Erfindung ist auch jede andere, dem zuständigen Fachmann bekannte Anordnung mit einen Ringspalt radial durchsetzenden Magnetfeldlinien verwendbar.

Die Bewegung der trägen Masse 2 quer zur Achse wird durch eine Dämpfung aufgrund der Flüssigkeitsverdrängung in dem ringförmigen Spalt 9, 9' zusätzlich gedämpft. Die zusätzliche Dämpfung ergibt sich aufgrund des sich ändernden Spaltquerschnittes, gesehen in Umfangsrichtung.

Nach Einbringen der magnetischen Flüssigkeit in den Spalt 9, 9' wird die Dämpfung gemessen und gegebenenfalls auf den geforderten Wert eingestellt. Die Einstellung kann durch Austausch der im Spalt 9, 9' befindlichen Dämpfungsflüssigkeit gegen eine Flüssigkeit mit unterschiedlicher Dämpfungseigenschaft erfolgen.

Bei dem in Fig. 7 skizzierten Beschleunigungsaufnehmer ist die träge Masse 2 über ein als Schraubenfeder dargestelltes Federelement 3 gegen das Gehäuse 4 abgestützt. Die Schraubenfeder ermöglicht Bewegungen der trägen Masse in vertikaler Richtung in der Darstellungsebene der Fig. 7.

Das Magnetsystem umfaßt zwei einen Teil der trägen Masse 2 bildende Magnete 11, die beiderseits des Steges eines im Querschnitt T-förmig ausgebildeten Bauteils 12 angeordnet sind. Die träge Masse 2 bildet das in etwa U-förmig geformte Jochteil 10 des Magnetsystems, das an den Innenseiten seiner Schenkel die Magnete 11 aufweist. Das Bauteil 12 weist die jeweils den Spalt 9, 9' zusammen mit dem Magneten 11 begrenzende Wand 8, 8' auf.

Nach Einbringen der magnetischen Flüssigkeit in den Spalt 9, 9' kann wie im zuvor beschriebenen Ausführungsbeispiel eine Einstellung der Dämpfung durch Austausch der im Spalt befindlichen Dämpfungsflüssigkeit gegen eine magnetische Flüssigkeit mit unterschiedlicher Dämpfungseigenschaft erfolgen.

Auch bei dem in Figur 7 skizzierten Beschleunigungsaufnehmer kann eine Einstellung des Dämpfungsfaktors durch Austausch des oder der Magneten 11 vorgenommen werden, sofern das Bauteil 12 aus einem elektrisch leitenden, nicht ferromagnetischen Werkstoff besteht.

Zur Erhöhung der Empfindlichkeit bzw. zur Vergrößerung der Meßgenauigkeit können gegebenenfalls im Rahmen der Erfindung unter Verwendung von Trennverstärkern mehrere Feder-Masse-Anordnungen in Reihe oder parallel angeordnet werden.

**Patentansprüche**

1. Beschleunigungsaufnehmer mit einer federnd abgestützten trägen Masse (2), mit einer Flüssigkeit zur Dämpfung und mit einer im geringen Abstand zur trägen Masse (2) angeordneten, mit der Abstützung (4) verbundenen, zur Erzielung einer Flüssigkeitsdämpfung vorgesehenen Wand (8, 8'), dadurch gekennzeichnet, daß sich im wesentlichen nur im Spalt (9, 9') zwischen träger Masse (2) und Wand (8, 8') zur Flüssigkeitsdämpfung eine magnetische Flüssigkeit befindet und daß der Spalt (9, 9') Teil eines Magnetsystems mit quer zum Spalt (9, 9') verlaufenden Magnetfeldlinien ist.

2. Beschleunigungsaufnehmer nach Anspruch 1, dadurch gekennzeichnet, daß die Wandfläche eben ist.

3. Beschleunigungsaufnehmer nach Anspruch 1, dadurch gekennzeichnet, daß die Wandfläche und eine zugeordnete Fläche der trägen Masse (2) eine vorzugsweise zylindrische Krümmung aufweisen und ein gekrümmter, vorzugsweise ringförmiger Spalt (9, 9') zwischen Wand (8, 8') und träger Masse (2) vorgesehen ist.

4. Beschleunigungsaufnehmer nach einem oder mehreren der vorhergehenden Ansprüche, dadurch gekennzeichnet, daß in geringem Abstand zu mindestens zwei sich gegenüberliegenden Bereichen der trägen Masse (2) jeweils eine Wand (8 bzw. 8') verläuft.

5. Beschleunigungsaufnehmer nach Anspruch 4, dadurch gekennzeichnet, daß zwei Wände (8 und 8') vorgesehen sind, deren Wandflächen parallel zueinander verlaufen.

6. Beschleunigungsaufnehmer nach einem oder mehreren der vorhergehenden Ansprüche, dadurch gekennzeichnet, daß die Wandfläche parallel zur Schwingungsrichtung der federnden Bewegung zwischen träger Masse (2) und Wand (8, 8') angeordnet ist.

7. Beschleunigungsaufnehmer nach einem oder mehreren der vorhergehenden Ansprüche, dadurch gekennzeichnet, daß als federnde Abstützung eine an einem Teil (5) eines Gehäuses (4) abgestützte Blattfeder vorgesehen ist, deren elastische Verformung mittels einer Dehnungsmeßstreifen-Anordnung (6) bestimmt wird.

8. Beschleunigungsaufnehmer nach Anspruch 7, dadurch gekennzeichnet, daß die träge Masse mittig an der Blattfeder angeordnet ist und die Blattfederenden an einem Teil des Gehäuses abgestützt sind.

9. Beschleunigungsaufnehmer nach einem oder mehreren der vorhergehenden Ansprüche, dadurch gekennzeichnet, daß die Spaltbreite justierbar ist.

10. Beschleunigungsaufnehmer nach einem oder mehreren der vorhergehenden Ansprüche, dadurch gekennzeichnet, daß die Spaltbreite temperaturabhängig veränderbar ist.

11. Beschleunigungsaufnehmer nach einem oder mehreren der vorhergehenden Ansprüche, dadurch gekennzeichnet, daß das Magnetsystem einen Permanentmagneten (11) aufweist.

12. Beschleunigungsaufnehmer nach Anspruch 11, dadurch gekennzeichnet, daß die träge Masse (2) als Permanentmagnet (11) ausgebildet ist.

13. Beschleunigungsaufnehmer nach Anspruch 11, dadurch gekennzeichnet, daß die Wand (8 bzw. 8') permanentmagnetisch ist oder mit einem Permanentmagneten (11) magnetisch leitend verbunden ist.

14. Beschleunigungsaufnehmer nach einem oder mehreren der vorhergehenden Ansprüche, dadurch gekennzeichnet, daß die Magnetfeldlinien quer zur Bewegungsrichtung der sich relativ zu den Magnetfeldlinien bewegenden, elektrisch leitend und nicht ferromagnetisch ausgebildeten trägen Masse (2) bzw. eines in dieser Art ausgebildeten Teils der trägen Masse verlaufen.

15. Beschleunigungsaufnehmer nach einem oder mehreren der vorhergehenden Ansprüche, dadurch gekennzeichnet, daß als magnetische Flüssigkeit eine gegen Agglomeration geschützte Suspension von ferromagnetischen Teilchen mit Abmessungen in der Größenordnung von 10 nm in einer Trägerflüssigkeit vorgesehen ist.

16. Beschleunigungsaufnehmer nach einem oder mehreren der vorhergehenden Ansprüche, dadurch gekennzeichnet, daß das Gehäuse (4) zur Kapselung gegen Umgebungseinflüsse ausgebildet ist.

17. Verfahren zur Herstellung eines Beschleunigungsaufnehmers nach Anspruch 1, dadurch gekennzeichnet, daß die federnde Abstützung der trägen Masse (2) vorgenommen wird, daß die magnetische Flüssigkeit in den Spalt (9, 9') zwischen träger Masse (2) und Wand (8, 8') eingebracht wird, daß die Dämpfung gemessen wird, und daß gegebenenfalls zur Einstellung der Dämpfung eine Justierung der Spaltbreite vorgenommen wird.

18. Verfahren zur Herstellung eines Beschleunigungsaufnehmers nach Anspruch 1, dadurch gekennzeichnet, daß die träge Masse (2) und die das Magnetsystem bildenden Teile zu einer Baueinheit zusammengestellt werden, daß die dieser Baueinheit zugeordnete Spaltbreite bestimmt wird, und daß zur Einstellung der Dämpfung eine magnetische Dämpfungsflüssigkeit mit einer durch die Spaltbreite vorgegebenen Dämpfungseigenschaft in den Spalt (9, 9') eingebracht wird.

19. Verfahren zur Herstellung eines Beschleunigungsaufnehmers nach Anspruch 14, dadurch gekennzeichnet, daß die träge Masse (2) und die das Magnetsystem bildenden Teile zu einer Baueinheit zusammengestellt werden, daß die dieser Baueinheit zugeordnete Spaltbreite bestimmt und daß zur Einstellung der Dämpfung gegebenenfalls eine Justierung des Magnetfeldes vorgenommen wird.

20. Verfahren zur Herstellung eines Beschleunigungsaufnehmers nach Anspruch 14, dadurch gekennzeichnet, daß die träge Masse (2) und die das Magnetsystem bildenden Teile zu einer Baueinheit zusammengestellt werden, daß die Dämpfung nach vorherigem Einbringen der magnetischen Flüssigkeit in den Spalt (9, 9') gemessen wird und daß zur Einstellung der Dämpfung gegebenenfalls eine Justierung des Magnetfeldes vorgenommen wird.

**Claims**

1. An acceleration sensor having a resiliently supported inert mass (2), having a liquid for the damping and having a wall (8, 8') disposed with slight spacing from the inert mass (2), connected to the supporting means (4) and provided to achieve a liquid damping, characterised in that there is a magnetic liquid substantially only in the gap (9, 9') between inert mass (2) and wall (8, 8') for the liquid damping and that the gap (9, 9') is part of a magnetic system with lines of magnetic flux extending transversely to the gap (9, 9').

2. An acceleration sensor according to Claim 1, characterised in that the wall surface is plane.

3. An acceleration sensor according to Claim 1, characterised in that the wall surface and an associated face of the inert mass (2) have a preferably cylindrical curvature and a curved, preferably annular gap (9, 9') is provided between wall (8, 8') and inert mass (2).

4. An acceleration sensor according to any one or more of the preceding Claims, characterised in that a wall (8 or 8') extends at a short distance from each of at least two opposite regions of the inert mass (2).

5. An acceleration sensor according to Claim 4, characterised in that two walls (8 and 8') are provided, the wall faces of which extend parallel to one another.

6. An acceleration sensor according to any one or more of the preceding Claims, characterised in that the wall face is disposed parallel to the direction of vibration of the resilient movement between inert mass (2) and wall (8, 8').

7. An acceleration sensor according to any one or more of the preceding Claims, characterised in that a leaf spring, which is supported on a portion (5) of a housing (4) and the elastic deformation of which is determined by a strain-gauge arrangement (6), is provided as a resilient supporting means.

8. An acceleration sensor according to Claim 7, characterised in that the inert mass is arranged centrally on the leaf spring and the ends of the leaf spring are supported on a portion of the housing.

9. An acceleration sensor according to any one or more of the preceding Claims, characterised in that the gap width is adjustable.

10. An acceleration sensor according to any one or more of the preceding Claims, characterised in that the gap width is variable depending on temperature.

11. An acceleration sensor according to any one or more of the preceding Claims, characterised in that the magnetic system comprises a permanent magnet (11).

12. An acceleration sensor according to Claim 11, characterised in that the inert mass (2) is constructed in the form of a permanent magnet (11).

13. An acceleration sensor according to Claim 11, characterised in that the wall (8 or 8') is permanently magnetic or is magnetically connected to a permanent magnet (11).

14. An acceleration sensor according to any one or more of the preceding Claims, characterised in that the lines of magnetic flux extend transversely to the direction of movement of the inert mass (2) which is moving relative to the lines of magnetic flux, and is electrically conducting and non-ferromagnetic in construction, or of a portion of the inert mass which is constructed in this manner.

15. An acceleration sensor according to any one or more of the preceding Claims, characterised in that a suspension of ferromagnetic particles with dimensions of the order of magnitude of 10 nm in a vehicle liquid, which suspension is protected from agglomeration, is provided as a magnetic liquid.

16. An acceleration sensor according to any one or more of the preceding Claims, characterised in that the housing (4) is adapted for encapsulation against environmental influences.

17. A method of producing an acceleration sensor according to Claim 1, characterised in that the resilient supporting of the inert mass (2) is effected, that the magnetic liquid is introduced into the gap (9, 9') between inert mass (2) and wall (8, 8'), that the damping is measured and that an adjustment of the gap width is possibly effected to adjust the damping.

18. A method of producing an acceleration sensor according to Claim 1, characterised in that the inert mass (2) and the parts forming the magnetic system are assembled to form a structural unit, that the gap width associated with this structural unit is determined and that a magnetic damping liquid having a damping characteristic preset by the gap width is introduced into the gap (9, 9') in order to adjust the damping.

19. A method of producing an acceleration sensor according to Claim 14, characterised in that the inert mass (2) and the parts forming the magnetic system are assembled to form a structural unit and the gap width associated with this structural unit is determined and that an adjustment of the magnetic field is possibly effected to adjust the damping.

20. A method of producing an acceleration sensor according to Claim 14, characterized in that the inert mass (2) and the parts forming the magnetic system are assembled to form a structural unit, that the damping is measured after previous introduction of the magnetic liquid into the gap (9, 9') and that an adjustment of the magnetic field is possibly effected to adjust the damping.

## Revendications

1. Capteur d'accélération comportant une masse inerte (2) en appui élastique, un liquide d'amortissement et une paroi (8, 8') disposée à faible distance de la masse inerte (2), reliée à l'appui (4), prévue pour obtenir un amortissement par liquide, caractérisé en ce qu'un liquide magnétique est présent, pour l'amortissement par liquide, presque seulement dans l'interstice (9, 9') entre la masse inerte (2) et la paroi (8, 8') et en ce que l'interstice (9, 9') fait partie d'un système magnétique comportant des lignes de champ magnétique s'étendant transversalement à l'interstice (9, 9').

2. Capteur d'accélération selon la revendication 1, caractérisé en ce que la surface de paroi plane.

3. Capteur d'accélération selon la revendication 1, caractérisé en ce que la surface de paroi et une surface correspondante de la masse inerte (2) présentent une courbure de préférence cylindrique, et une fente (9, 9') incurvée, de préférence annulaire, est prévue entre la paroi (8, 8') et la masse inerte (2).

4. Capteur d'accélération selon une ou plusieurs des revendications précédentes, caractérisé en ce qu'une paroi (8 ou 8') s'étend à faible distance de chacune d'au moins deux zones opposées de la masse inerte (2).

5. Capteur d'accélération selon la revendication 4, caractérisé en ce que l'on prévoit deux parois (8 et 8') dont les surfaces sont parallèles entre elles.

6. Capteur d'accélération selon une ou plusieurs des revendications précédentes, caractérisé en ce que la surface de paroi est disposée parallèlement à la direction d'oscillation du mouvement élastique entre la masse inerte (2) et la paroi (8, 8').

7. Capteur d'accélération selon une ou plusieurs des revendications précédentes, caractérisé en ce que l'on prévoit, comme appui élastique, un ressort à lames s'appuyant sur une partie (5) d'un boîtier (4) dont la déformation élastique est déterminée au moyen d'un dispositif extensométrique (6).

8. Capteur d'accélération selon la revendication 7, caractérisé en ce que la masse inerte est disposée centralement sur le ressort à lames, et en ce que les extrémités du ressort à lames s'appuient sur une partie du boîtier.

9. Capteur d'accélération selon une ou plusieurs des revendications précédentes, caractérisé en ce que la largeur de l'interstice est ajustable.

10. Capteur d'accélération selon une ou plusieurs des revendications précédentes, caractérisé en ce que la largeur de l'interstice est variable en fonction de la température.

11. Capteur d'accélération selon une ou plusieurs des revendications précédentes, caractérisé en ce que le système magnétique comporte un aimant permanent (11).

12. Capteur d'accélération selon la revendication 11, caractérisé en ce que la masse inerte (2) est réalisée sous la forme d'un aimant permanent (11).

13. Capteur d'accélération selon la revendication 11, caractérisé en ce que la paroi (8, respectivement 8') a une aimantation permanente ou est en liaison magnétique avec un aimant permanent (11).

14. Capteur d'accélération selon une ou plusieurs des revendications précédentes, caractérisé en ce que les lignes de champ magnétique s'étendent transversalement à la direction de déplacement de la masse inerte (2) mobile par rapport aux lignes de champ magnétique, conformée de façon à être électriquement conductrice et non ferromagnétique, ou d'une partie de la masse inerte conformée de cette façon.

15. Capteur d'accélération selon une ou plusieurs des revendications précédentes, caractérisé en ce que l'on prévoit, comme liquide magnétique, une suspension, protégée contre l'agglomération, de particules ferromagnétiques de dimensions de l'order de 10 nm dans un liquide de support.

16. Capteur d'accélération selon une ou plusieurs des revendications précédentes, caractérisé en ce que le boîtier (4) est conformé de façon à assurer l'isolement vis-à-vis des influences environnantes.

17. Procédé de fabrication d'un capteur d'accélération selon la revendication 1, caractérisé en ce qu'on réalise l'appui élastique de la masse inerte (2), on introduit le liquide magnétique dans l'interstice (9, 9') entre la masse inerte (2) et la paroi (8, 8'), on mesure l'amortissement, et l'on effectue éventuellement un ajustement de la largeur de l'interstice pour régler l'amortissement.

18. Procédé de fabrication d'un capteur d'accélération selon la revendication 1, caractérisé en ce qu'on rassemble la masse inerte (2) et les éléments constituant le système magnétique en une unité modulaire, on détermine la largeur de l'interstice correspondant à cette unité modulaire, pour régler l'amortissement, on introduit dans l'interstice (9, 9') un liquide d'amortissement magnétique présentant une caractéristique d'amortissement prédéfinie par la largeur de l'interstice.

19. Procédé de fabrication d'un capteur d'accélération selon la revendication 14, caractérisé en ce que l'on rassemble la masse inerte (2) et les éléments constituant le système magnétique en une unité modulaire, on détermine la largeur de l'interstice correspondant à cette unité modulaire, et, pour régler l'amortissement, on effectue éventuellement un ajustement du champ magnétique.

20. Procédé de fabrication d'un capteur d'accélération selon la revendication 14, caractérisé en ce que l'on rassemble la masse inerte (2) et les éléments constituant le système magnétique en une unité modulaire, on mesure l'amortissement après l'introduction préalable du liquide magnétique dans l'interstice (9, 9'), et pour régler l'amortissement, on effectue éventuellement un ajustement du champ magnétique.

Fig.1

Fig.2

Fig. 2a

Fig.3

Fig.4

EP 0 242 406 B1

Fig. 5

Fig. 6

Fig. 7